# EUROPÄISCHE PATENTSCHRIFT

(11) **EP 3 268 614 B1**
(45) Veröffentlichungstag und Bekanntmachung des Hinweises auf die Patenterteilung: **17.08.2022**
(21) Anmeldenummer: 16708130.6
(22) Anmeldetag: 03.03.2016
(51) Int. Cl.: F04D 19/00, F04D 29/52, F04D 29/58, F04D 29/64, F04D 29/42

(54) **VENTILATORGEHÄUSE MIT HEIZBANDKANAL**
FAN HOUSING HAVING A HEATING BAND CHANNEL
BOÎTIER DE VENTILATEUR AVEC CANAL DE BANDE CHAUFFANTE

(30) Priorität: 10.03.2015 DE 102015103499
(43) Veröffentlichungstag der Anmeldung: 17.01.2018
(73) Patentinhaber: ebm-papst Mulfingen GmbH & Co. KG, 74673 Mulfingen (DE)
(72) Erfinder: HOSS, Sebastian, 97980 Bad Mergentheim (DE); HAAF, Oliver, 74635 Kupferzell (DE)
(74) Vertreter: Staeger & Sperling Partnerschaftsgesellschaft mbB
(86) Internationale Anmeldenummer: PCT/EP2016/054577
(87) Internationale Veröffentlichungsnummer: WO 2016/142275

(56) Entgegenhaltungen:
- WO-A1-2014/056677
- DE-A1-102012 109 544
- US-A1- 2012 051 889

## Beschreibung

Die Erfindung betrifft ein Ventilatorgehäuse mit einem Gehäusekörper zur Aufnahme von Ventilatorbauteilen, insbesondere auch einem Heizband.

Ferner betrifft die Erfindung eine Ventilatorbaueinheit mit einem derartigen Ventilatorgehäuse.

Aus dem Stand der Technik sind Ventilatorgehäuse und Wandringe für Ventilatoren in den verschiedensten Ausführungen bekannt. Für den Einsatz bei Kälteanwendungen, bei denen die Gefahr von Vereisung besteht, wird beispielsweise in der auf die Anmelderin zurückgehenden Patentanmeldung DE 10 2012 109 544 A1 eine Heizung in Form einer Wandringheizung an dem Wandring offenbart.

Die aus dem Stand der Technik bekannte Lösung funktioniert in der Praxis sehr gut, jedoch erfordert die Montage des Heizbandes eine Demontage der Verkleidung, insbesondere wenn diese nicht rund ist. Auch ist ein Nachrüsten eines Heizbandes beispielsweise im am Einsatzort montierten Zustand nur mit erhöhtem Aufwand oder erst nach einer Demontage möglich. Weiterer Stand der Technik ist in der Druckschrift WO2014056677 offenbart.

Der Erfindung liegt deshalb die Aufgabe zugrunde, ein Ventilatorgehäuse bereit zu stellen, das auf seiner Außenseite mit einem Heizband sowohl bei der Erstmontage als auch zur Nachrüstung ausgestattet werden kann, ohne dass die gesamte Außenverkleidung entfernt werden muss. Ferner soll eine Verwendung von Außenverkleidungen in verschiedenen Formen, beispielsweise in der Draufsicht in Form eines Sechs- oder Achtecks ermöglicht werden.

Diese Aufgabe wird durch die Merkmalskombination gemäß Patentanspruch 1 gelöst.

Dabei wird erfindungsgemäß ein Ventilatorgehäuse mit einem Gehäusekörper zur Aufnahme von Ventilatorbauteilen und einer den Gehäusekörper in Umfangsrichtung umgebenden Außenverkleidung vorgeschlagen, wobei der Gehäusekörper an seiner radialen Außenseite mindestens zwei in Umfangsrichtung verlaufende Stege und/oder die Außenverkleidung an ihrer radialen Innenseite mindestens zwei in Umfangsrichtung verlaufende Rippen aufweist, die im montierten Zustand zwischen dem Gehäusekörper und der Außenverkleidung einen in Umfangsrichtung umlaufenden Kanal zur Aufnahme und Halterung eines Heizbandes bilden. Die Außenverkleidung weist dabei mindestens eine, in radialer Richtung zu dem Gehäusekörper sowie in den Kanal weisende und sich in Umfangsrichtung erstreckende Führungsrippe auf. Durch die Verwendung einer Führungsrippe kann das Heizband in den Kanal zwischen Gehäusekörper und Außenverkleidung in Umfangsrichtung eingeschoben werden, ohne dass die gesamte Außenverkleidung entfernt werden muss. Die Führungsrippe sorgt für
eine Führung des Heizbandes in Umfangsrichtung, um ein Verkanten innerhalb des Kanals zu vermeiden. Insbesondere bei nicht runden Außenverkleidungen weist das Innere des Kanals Kanten auf, an denen sich das Heizband ohne mindestens eine Führungsrippe verhaken könnte und somit nicht weiter einschiebbar wäre.

Der Gehäusekörper kann in einer günstigen Ausführungsform als Wandring eines Axialventilators ausgebildet sein.

In einer vorteilhaften Ausführungsform ist vorgesehen, dass die Außenverkleidung aus mindestens zwei Segmenten besteht, wobei zumindest eines der Segmente lösbar an dem Gehäusekörper befestigt ist und einen Zugang zu dem Kanal ermöglicht. Die Verwendung von einzelnen Segmenten ermöglicht einen Zugriff auf den Kanal nach Entfernung nur eines der Segmente, ohne dass die restliche Außenverkleidung demontiert werden müsste. Für ein Nachrüstung oder einen Austausch des Heizbandes wird lediglich das eine lösbare Segment entfernt und das Heizband eingeschoben bzw. ersetzt. Anschließend wird das Segment wieder montiert. Die Befestigung des Segments erfolgt dabei vorteilhafterweise durch eine Klemm- oder Klipsverbindung.

Die Anzahl der Segmente ist beliebig festlegbar und kann bei einer mehreckigen Ausbildung der Außenverkleidung beispielsweise der Anzahl der Ecken entsprechen. Eine vorteilhafte Ausführungsvariante der Erfindung ist jedoch dadurch gekennzeichnet, dass die Außenverkleidung aus genau zwei Segmenten besteht, wobei eines der Segmente lösbar an dem Gehäusekörper befestigt ist und das lösbare Segment 1/3 bis 1/8 des Umfangs der Außenverkleidung einnimmt. Das bedeutet, dass der wesentliche Anteil der Außenverkleidung an dem Gehäusekörper befestigt sein kann und nur ein verhältnismäßig kleines Segment entfernt werden muss, um das Heizband in den Kanal einzuschieben bzw. es zu ersetzen. Dies ist sehr leicht handhabbar.

Ferner ist eine Ausführungsvariante günstig, bei der die mindestens eine Führungsrippe der Außenverkleidung jeweils an den Innenseiten der Segmente ausgebildet ist und an in Umfangsrichtung weisenden Segmentkanten an einer Stoßkante aneinander stoßen, wobei die radiale und axiale Stoßkante in Umfangsrichtung bündig verläuft. Bei der Verwendung einer aus Segmenten gebildeten Außenverkleidung ergibt sich an den angrenzenden Segmentkanten jeweils ein Stoß der mindestens einen Führungsrippe. Zur Vermeidung einer Verkantung des Heizbandes an dem Stoß, verläuft die sich in Umfangsrichtung erstreckende Führungsrippe von Segment zu Segment vorteilhafterweise axial und insbesondere radial bündig.

In einer ebenfalls vorteilhaften alternativen Ausführung ist vorgesehen, dass die zwischen den jeweiligen Segmenten jeweils gebildete Stoßkante der Führungsrippe in Umfangsrichtung jeweils eine radiale Stufe aufweist. Die radiale Stufe ist in einer als Einschubrichtung vorbestimmten Umfangsrichtung so gebildet, dass sich stets nach radial außen weist. Erreicht wird die Stufe, indem der sich in Umfangsrichtung jeweils anschließende Abschnitt der Führungsrippe an dem sich anschließenden Segment radial kürzer ausgebildet ist und weniger weit in den Kanal vorsteht. Beim Einschieben des Heizbandes in Umfangsrichtung gleitet das vordere Ende des Heizbandes an der Innenseite der Außenverkleidung und der mindestens einen Führungsrippe entlang. Durch die jeweilige Stufe an der mindestens einen Führungsrippe nach radial außen wird ein Verkanten des Heizbandes an den Stoßkanten zwischen den Segmenten vermieden.

In einer Weiterbildung ist vorgesehen, dass der Gehäusekörper an seiner radialen Außenseite zumindest abschnittsweise axiale Führungsschenkel aufweist, deren radiale Außenkanten schräg radial einwärts verlaufen und dabei in Richtung eines im montierten Zustand den Kanal bildenden Abschnitts weisen. Die zu dem oder sogar in den Kanal gerichteten Führungsschenkel ermöglichen eine Blindzuführung des Heizbandes in den Kanal. Dies ist beispielsweise bei einer Ausrüstung des Heizbandes im am Einsatzort montierten Zustand (bspw. auch bei einer Deckenmontage) von Vorteil, bei der die Zuführstelle nicht einsehbar ist. Zur Montage kann das vordere, einzuschiebende Ende des Heizbandes entlang der Führungsschenkel bis an die Einschuböffnung des Kanals gesetzt und anschließen in Umfangsrichtung in den Kanal eingeschoben werden.

Die Stege und/oder die Rippen sind in einer günstigen Ausführung derart ausgebildet, dass sie ein üblicherweise eingesetztes Heizband in radialer Richtung ausreichend überdecken, um in Umfangsrichtung eine axiale Führung für das Einschieben eines Heizbandes zu bilden. Die Stege und Rippen können dabei zusammenwirken und in radialer Richtung anstoßen oder sich leicht versetzt überlappen. Auch ist erfindungsgemäß umfasst, dass nur Stege oder nur Rippen vorgesehen werden, die jeweils in radialer Richtung ausreichend groß dimensioniert sind, dass sie an der Außenverkleidung bzw. dem Gehäusekörper zum Anliegen kommen.

Die Erfindung umfasst auch die gesamte Ventilatorbaueinheit mit einem Motor, einem Laufrad und wahlweise einem Schutzgitter. Die Ventilatorbaueinheit umfasst das oben beschriebene, das Laufrad umgebende Ventilatorgehäuse.

Sämtliche offenbarten Merkmale sind beliebig kombinierbar, soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines aufgebrochenen Ventilatorgehäuses;
- Fig. 2: eine seitliche Ansicht in das teilweise aufgebrochene Ventilatorgehäuse aus Fig. 1;
- Fig. 3: eine Draufsicht in den Kanal des Ventilatorgehäuses aus Figur 1.

Die Figuren sind beispielhaft schematisch und dienen zum besseren Verständnis der erfindungsgemäßen Merkmale, wobei nicht sämtliche, vorstehend beschriebenen Merkmale dargestellt sind, gleichwohl trotzdem realisiert sein können, wie z.B. eine antibakterielle Beschichtung.

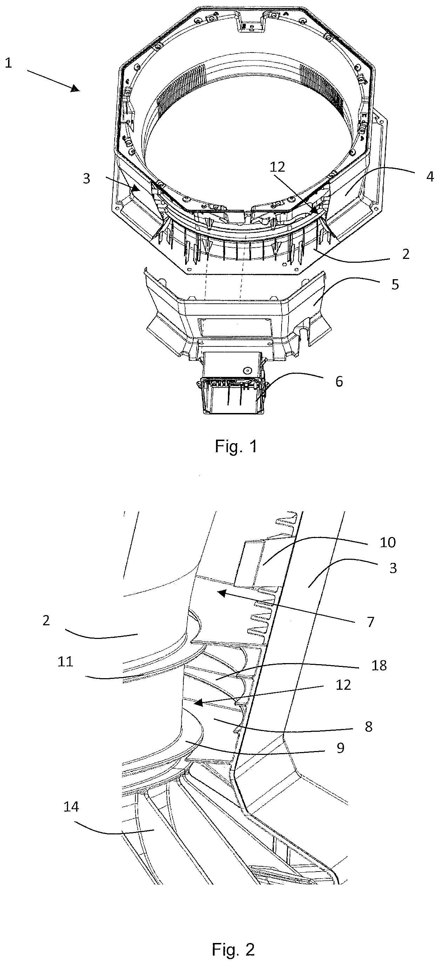

In Figur 1 ist ein achteckiges Gehäuse 1 eines Axialventilators zum Einsatz bei Kühlanwendungen in einer perspektivischen Ansicht und teilweise aufgebrochen dargestellt. Das Gehäuse 1 ist gebildet aus einem als Wandring ausgebildeten Gehäusekörper 2, innerhalb dessen das Laufrad (nicht gezeigt) des Ventilators rotiert, und einer auf der radialen Außenseite des Gehäusekörpers 2 angeordneten Außenverkleidung 3, die den Gehäusekörper 2 in Umfangsrichtung flächig umgibt. Die radiale Außenfläche des Gehäuses 2 wird vollständig durch die äußere Fläche der Außenverkleidung 3 gebildet. Ihre Kontur ist glatt, im Wesentlichen kantenfrei und ohne Hinterschnitte ausgebildet, um keine Anhaftungs- oder Sammelmöglichkeit für Schmutzpartikel zu bieten.

In dem gezeigten Ausführungsbeispiel wird die Außenverkleidung 3 durch die Segmente 4, 5 gebildet, die miteinander durch die in Figur 2 detaillierter gezeigten Haken 10 befestigt werden. Die Segmente 4, 5 bilden im montierten Zustand zueinander einen bündigen Übergang ohne Vertiefungen oder Spalte. In Figur 1 ist beispielhaft gezeigt, dass das Segment 5 mit dem daran ausgebildeten elektrischen Anschluss 6 demontiert wurde. Das weitere Segment 4 ist in dieser Ausführung einteilig ausgebildet, kann jedoch anwendungsspezialisiert und herstellungsoptimiert noch mehrfach unterteilt werden. Die Außenverkleidung 3 ist bzw. die Segmente 4, 5 sind über Klipsverbindungen lösbar an dem Gehäusekörper 2 oder miteinander befestigt.

Das lösbare Segment 5 nimmt 1/4 des Umfangs der Außenverkleidung 3 ein. Es kann somit zur Montage des aus Übersichtlichkeitsgründen nicht dargestellten Heizbandes leicht entfernt und nach dem Einschieben des Heizbandes wieder befestigt werden. Nach der Demontage des Segments 5 liegt der Kanal 12 teilweise frei, um eine Einschuböffnung für das Heizband bereit zu stellen. Vorzugsweise wird eine Einschubrichtung in eine vorbestimmte Umfangsrichtung festgelegt.

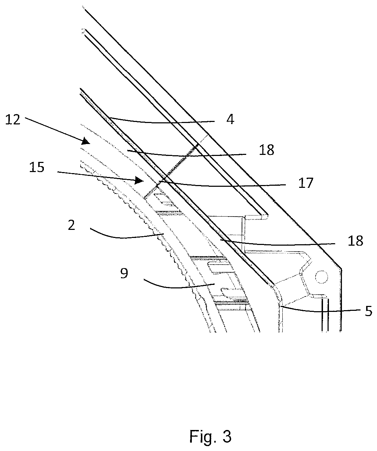

Figur 2 zeigt das Gehäuse 1 aus Figur 1 in einer seitlichen Ansicht, wobei jeweils lediglich eine Seite des Gebläses 1 gezeigt ist. Die gegenüberliegende Seite ist jedoch gespiegelt identisch. Die Außenverkleidung 3 ist beabstandet zu dem Gehäusekörper 2 angeordnet, so dass sich zwischen den beiden Bauteilen ein in Umfangsrichtung vollständig umlaufender Hohlraum 7 bildet. An dem Gehäusekörper 2 sind in Umfangsrichtung verlaufende und sich radial nach außen erstreckende Stege 9, 11 ausgebildet. Die Stege 9, 11 wirken mit an der Außenverkleidung 3 ausgebildeten Rippen 7, 8 zusammen, um einen in Umfangsrichtung vollständig umlaufenden Kanal 12 zu bilden, in den das Heizband positionsfest verlegbar ist. An der Außenverkleidung 3 sind mehrere axiale beabstandete und in radialer Richtung zu dem Gehäusekörper 2 sowie in den Kanal 12 weisende und sich in Umfangsrichtung erstreckende Führungsrippen 18 ausgebildet. Die Innenkontur der Führungsrippen 18 entspricht im Wesentlichen der Außenkontur des Gehäusekörpers 2, wobei die Radialerstreckung der Führungsrippen 18 die eckige Form der Außenverkleidung 3 ausgleicht, um einen im Wesentlichen umlaufend runden Kanal 12 zu gewährleisten. Im Bereich des Segments 5 sind an dem Gehäusekörper 2 radial außenseitige axiale Führungsschenkel 14 ausgebildet, deren radiale Außenkanten schräg radial einwärts verlaufen und dabei in Richtung des Kanals 12 weisen. Das nicht gezeigte Heizband kann auf die Führungsschenkel 14 aufgelegt und in den Kanal 12 zunächst in axialer Richtung eingeschoben werden, bis es mit seinem vorderen Ende innerhalb der Stege 9, 11, d.h. des Kanals 12 positioniert ist, wobei es anschließend in Umfangsrichtung entlang des Kanals 12 weitergeschoben wird, bis es den Gehäusekörper 2 vollständig umgibt. Figur 3 zeigt eine Draufsicht eines Übergangs zwischen den Segmenten 4, 5 und in den Kanal 12 des Ventilatorgehäuses 1 aus Figur 1. Die Segmente 4, 5 und die jeweils daran ausgebildeten Abschnitte der Führungsrippen 18 stoßen aneinander an und bilden eine Stoßkante 17. An der Stoßkante 17 weisen die Führungsrippen 18 eine nach radial außen gerichtete Stufe 15 auf, so dass das Heizband beim Durchschieben durch den Kanal 12 an der Stoßkante 17 nicht verhakt. Auch wenn Figur 3 nur einen Übergang zwischen zwei Segmenten 4, 5 zeigt, ist erfindungsgemäß jeder weitere Übergang zwischen nachfolgenden Segmenten entsprechend ausgebildet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Ventilatorgehäuse mit einem Gehäusekörper (2) zur Aufnahme von Ventilatorbauteilen und einer den Gehäusekörper (2) in Umfangsrichtung umgebenden Außenverkleidung (3), wobei der Gehäusekörper (2) an seiner radialen Außenseite mindestens zwei in Umfangsrichtung verlaufende Stege (9, 11) und/oder die Außenverkleidung (3) an ihrer radialen Innenseite mindestens zwei in Umfangsrichtung verlaufende Rippen (7, 8) aufweist, die im montierten Zustand zwischen dem Gehäusekörper (2) und der Außenverkleidung (3) einen in Umfangsrichtung umlaufenden Kanal (12) zur Aufnahme und Halterung eines Heizbandes bilden, **dadurch gekennzeichnet, dass** die Außenverkleidung (3) mindestens eine, in radialer Richtung zu dem Gehäusekörper (2) sowie in den Kanal (12) weisende und sich in Umfangsrichtung erstreckende Führungsrippe (18) aufweist.

2. Ventilatorgehäuse nach Anspruch 1, **dadurch gekennzeichnet, dass** die Außenverkleidung (3) aus mindestens zwei Segmenten (4, 5) besteht, wobei zumindest eines der Segmente (5) lösbar an dem Gehäusekörper (2) befestigt ist und einen Zugang zu dem Kanal (12) ermöglicht.

3. Ventilatorgehäuse nach Anspruch 1 oder 2, **dadurch gekennzeichnet, dass** die Außenverkleidung (3) aus zwei Segmenten (4, 5) besteht, wobei eines der Segmente (5) lösbar an dem Gehäusekörper (2) befestigt ist und das lösbare Segment 1/3 bis 1/8 des Umfangs der Außenverkleidung (3) einnimmt.

4. Ventilatorgehäuse nach einem der vorigen Ansprüche 2 bis 3, **dadurch gekennzeichnet, dass** die mindestens eine Führungsrippe (18) der Außenverkleidung (3) jeweils an den Innenseiten der Segmente (4, 5) ausgebildet ist und an in Umfangsrichtung weisenden Segmentkanten aneinander an einer Stoßkante (17) anstoßen, wobei die radiale und axiale Stoßkante (17) in Umfangsrichtung bündig verläuft.

5. Ventilatorgehäuse nach zumindest einem der vorigen Ansprüche 2 bis 4, **dadurch gekennzeichnet, dass** die mindestens eine Führungsrippe (18) der Außenverkleidung (3) jeweils an den Innenseiten der Segmente (4, 5) ausgebildet ist und an in Umfangsrichtung weisenden Segmentkanten jeweils aneinander angrenzen, wobei die mindestens eine Führungsrippe (18) der Segmente (4, 5) mit einer Stoßkante (17) zueinander weisend angeordnet ist, und die durch die mindestens eine Führungsrippe (18) gebildete Stoßkante (17) in Umfangsrichtung jeweils eine radiale Stufe (15) aufweist.

6. Ventilatorgehäuse nach dem vorigen Anspruch, **dadurch gekennzeichnet, dass** in einer vorbestimmten Umfangsrichtung die radiale Stufe (15) jeder Segmentkante der mindestens einen Führungsrippe (18) zwischen jedem der Segmente (4, 5) stets in Richtung nach radial außen gerichtet ist.

7. Ventilatorgehäuse nach zumindest einem der vorigen Ansprüche, **dadurch gekennzeichnet, dass** der Gehäusekörper (2) an seiner radialen Außenseite zumindest abschnittsweise axiale Führungsschenkel (14) aufweist, deren radiale Außenkanten schräg radial einwärts verlaufen und dabei in Richtung eines im montierten Zustand den Kanal (12) bildenden Abschnitts weisen.

8. Ventilatorgehäuse nach zumindest einem der vorigen Ansprüche, **dadurch gekennzeichnet, dass** die Außenverkleidung (3) teilweise entfernbar ist und, nach der teilweisen Entfernung der Außenverkleidung (3), ein Heizband in Umfangsrichtung in den Kanal (12) über den voll Umfang einschiebbar ist.

9. Ventilatorgehäuse nach zumindest einem der vorigen Ansprüche, **dadurch gekennzeichnet, dass** die Stege (9, 11) und/oder die Rippen (7, 8) in Umfangsrichtung eine axiale Führung für das Einschieben eines Heizbandes bilden.

10. Ventilatorbaueinheit mit einem Motor und einem Laufrad, umfassend ein Ventilatorgehäuse (1) nach zumindest einem der vorigen Ansprüche, wobei das Ventilatorgehäuse (1) das Laufrad umgibt.

## Claims

1. A fan housing with a housing body (2) for accommodating fan components and an outer casing (3) which surrounds the housing body (2) in circumferential direction, wherein the housing body (2) has at least two webs (9, 11) extending in circumferential direction on the radial outer side thereof, and/or the outer casing (3) has at least two ribs (7, 8) extending in circumferential direction on the radial inner side thereof, which ribs, in the assembled state, between the housing body (2) and the outer casing (3), form a channel (12) circulating in circumferential direction for receiving and holding a heating band, **characterized in that** the outer casing (3) has at least one guiding rib (18) directed in the radial direction toward the housing body (2) as well as into the channel (12) and extending in circumferential direction.

2. The fan housing according to Claim 1, **characterized in that** the outer casing (3) consists of at least two segments (4, 5), wherein at least one of the segments (5) is fastened detachably to the housing body (2) and enables access to the channel (12).

3. The fan housing according to Claim 1 or 2, **characterized in that** the outer casing (3) consists of two segments (4, 5), wherein one of the segments (5) is detachably fastened to the housing body (2) and the detachable segment takes up 1/3 to 1/8 of the circumference of the outer casing (3).

4. The fan housing according to one of the preceding claims 2 to 3, **characterized in that** the at least one guiding rib (18) of the outer casing (3) is formed in each case on the inner sides of the segments (4, 5) and, on segment edges directed in circumferential direction, they abut against one another on abutting edges (17), wherein the radial and axial abutting edge (17) extends flush in circumferential direction.

5. The fan housing according to at least one of the preceding Claims 2 to 4, **characterized in that** the at least one guiding rib (18) of the outer casing (3) is formed in each case on the inner sides of the segments (4, 5) and they adjoin one another on segment edges directed in circumferential direction, wherein the at least one guiding rib (18) of the segments (4, 5) with an abutting edge (17) is arranged in a mutually facing manner, and the abutting edge (17) formed by the at least one guiding rib (18) comprises in each case a radial step (15) in circumferential direction.

6. The fan housing according to the preceding claim, **characterized in that**, in a predetermined circumferential direction, the radial step (15) of each segment edge of the at least one guiding rib (18) is arranged between each of the segments (4, 5) always in the radial outward direction.

7. The fan housing according to at least one of the preceding claims, **characterized in that** the housing body (2), on the radial outer side thereof, at least in sections, comprises axial guiding limbs (14), the radial outer edges of which extend at a slant radially inward and thereby are directed in the direction of a section forming the channel (12) in the assembled state.

8. The fan housing according to at least one of the preceding claims, **characterized in that** the outer casing (3) can be partially removed and, after the partial removal of the outer casing (3), a heating band can be inserted in circumferential direction into the channel (12) over the entire circumference.

9. The fan housing according to at least one of the preceding claims, **characterized in that** the webs (9, 11) and/or the ribs (7, 8) form an axial guide in circumferential direction for the insertion of a heating band.

10. A fan assembly with a motor and an impeller comprising a fan housing (1) according to at least one of the preceding claims, wherein the fan housing (1) surrounds the impeller.

## Revendications

1. Boîtier de ventilateur comprenant un corps de boîtier (2) servant à recevoir des composants de ventilateur et une enveloppe extérieure (3) entourant le corps de boîtier (2) dans la direction circonférentielle (3), le corps de boîtier (2) présentant sur sa face extérieure radiale au moins deux entretoises (9, 11) s'étendant dans la direction circonférentielle et/ou l'enveloppe extérieure (3) présentant sur sa face intérieure radiale au moins deux nervures (7, 8) s'étendant dans la direction circonférentielle qui forment à l'état monté entre le corps de boîtier (2) et l'enveloppe extérieure (3) un canal (12) périphérique dans la direction circonférentielle pour recevoir et maintenir une bande chauffante,
**caractérisé en ce que** l'enveloppe extérieure (3) présente au moins une nervure de guidage (18) orientée dans la direction radiale par rapport au corps de boîtier (2) et dans le canal (12) et s'étendant dans la direction circonférentielle.

2. Boîtier de ventilateur selon la revendication 1, **caractérisé en ce que** l'enveloppe extérieure (3) est composée d'au moins deux segments (4, 5), au moins l'un des segments (5) étant fixé de manière amovible au corps de boîtier (2) et donnant accès au canal (12).

3. Boîtier de ventilateur selon la revendication 1 ou 2, **caractérisé en ce que** l'enveloppe extérieure (3) est composée de deux segments (4, 5), l'un des segments (5) étant fixé de manière amovible au corps de boîtier (2), et le segment amovible occupant de 1/3 à 1/8 de la circonférence de l'enveloppe extérieure (3).

4. Boîtier de ventilateur selon l'une quelconque des revendications précédentes 2 à 3, **caractérisé en ce que** ladite au moins une nervure de guidage (18) de l'enveloppe extérieure (3) est réalisée respectivement sur les faces intérieures des segments (4, 5), et **en ce qu'**elles sont adjacentes l'une à l'autre à un rebord (17) au niveau de bords de segment orientés dans la direction circonférentielle, le rebord radial et le rebord axial (17) s'étendant en affleurement dans la direction circonférentielle,

5. Boîtier de ventilateur selon au moins l'une des revendications précédentes 2 à 4, **caractérisé en ce que** ladite au moins une nervure de guidage (18) de l'enveloppe extérieure (3) est réalisée respectivement sur les faces intérieures des segments (4, 5), et **en ce qu'**elles sont contiguës respectivement l'une à l'autre au niveau de bords de segment orientés dans la direction circonférentielle, les au moins une nervures de guidage (18) des segments (4, 5) étant disposées en étant tournées l'une vers l'autre par un rebord (17), et le rebord (17) formé par ladite au moins une nervure de guidage (18) présentant dans la direction circonférentielle respectivement un gradin radial (15).

6. Boîtier de ventilateur selon la revendication précédente, **caractérisé en ce que** dans une direction circonférentielle prédéterminée, le gradin radial (15) de chaque bord de segment de ladite au moins une nervure de guidage (18) entre chacun des segments (4, 5) est toujours dirigé dans la direction radialement vers l'extérieur.

7. Boîtier de ventilateur selon au moins l'une des revendications précédentes, **caractérisé en ce que** le corps de boîtier (2) présente sur sa face extérieure radiale au moins par endroits des branches de guidage axiales (14) dont les bords extérieurs radiaux s'étendent en oblique radialement vers l'intérieur et sont alors orientées dans la direction d'une partie qui, à l'état monté, forme le canal (12).

8. Boîtier de ventilateur selon au moins l'une des revendications précédentes, **caractérisé en ce que** l'enveloppe extérieure (3) peut être retirée partiellement, et après le retrait partiel de l'enveloppe extérieure (3), une bande chauffante peut être insérée dans la direction circonférentielle dans le canal (12) sur toute la circonférence.

9. Boîtier de ventilateur selon au moins l'une des revendications précédentes, **caractérisé en ce que** les entretoises (9, 11) et/ou les nervures (7, 8) forment dans la direction circonférentielle un guidage axial pour l'insertion d'une bande chauffante.

10. Unité modulaire de ventilateur pourvue d'un moteur et d'un rotor, comprenant un boîtier de ventilateur (1) selon au moins l'une des revendications précédentes, le boîtier de ventilateur (1) entourant le rotor.
